# EUROPEAN PATENT SPECIFICATION

(11) **EP 4 333 485 B1**
(45) Date of publication and mention of the grant of the patent: **21.08.2024**
(21) Application number: 22193004.3
(22) Date of filing: 30.08.2022
(51) Int. Cl.: H04W 24/02

(54) **MEETING NETWORK SLICING PERFORMANCE REQUIREMENT**
ERFÜLLUNG DER ANFORDERUNGEN AN EINE NETZWERK-SLICING-LEISTUNG
RÉPONSE AUX EXIGENCES DE PERFORMANCES DE DÉCOUPAGE DU RÉSEAU

(43) Date of publication of application: 06.03.2024
(73) Proprietor: British Telecommunications public limited company, London E1 8EE (GB)
(72) Inventor: HART, Jonathan, London, E1 8EE (GB); LALOVIC, Milan, London, E1 8EE (GB); MIRTCHEV, Svilen, London, E1 8EE (GB)
(74) Representative: British Telecommunications public limited company Intellectual Property Department

(56) References cited:
- GB-A- 2 602 117
- US-A1- 2014 133 322
- US-A1- 2020 170 052

## Description

### Field of Invention

The present invention relates to a method of operating a wireless telecommunications network, and in particular a radio access point of a radio access network.

### Background

In cellular telecommunications, network slicing is a method of virtualising a network so as to create multiple logical networks within a single physical network. This is typically undertaken to offer differentiated service models, which might include varying performance and/or stability characteristics, and it is supported by the fact that network slices are isolated from one another other during operation. As a result, high traffic or a large number of users on one slice is unable negatively to affect other network slices.

For example, network slices may be configured to provide specialised functions, including: exclusively serving emergency services (which demands, at least, high reliability); enhanced Mobile Broadband (eMBB); and Massive Machine-Type Communications (MMTC).

To facilitate effective network slicing in cellular telecommunications, it is desirable that end-to-end network slicing is provided, in which a network slice can be provided from the Radio Access Network (RAN) through the transport network and on to the core network.

However, existing solutions to implement network slicing as part of the RAN may require dedicated radio spectrum, dedicated base stations, and/or specialised RAN schedulers; such solutions may require significant financial cost and operational complexity.

It is an aim of the present invention to at least alleviate some of the aforementioned problems. GB2602117 discloses, at a radio access point comprising a plurality of antenna elements, a portion of the antenna elements are reserved for a given network slice. When a signal from a user equipment (UE) is received by the antenna elements, and the UE is determined to be allocated to that slice, the access point only processes the wireless signals as received by the reserved set of antenna elements. The access point may receive a command to reserve the portion of antenna elements, and the command may specify the required number of elements. The number may be chosen in accordance with a performance requirement of the slice. For example, a URLLC slice may be designated a greater number of antenna elements than a lower performance, eMBB slice. The signal processing may be performed by the radio resource unit (RRU) and may comprise joint interference cancellation processing. The plurality of antenna elements may form a MIMO array.

US2020170052 discloses that a computer device may include a memory storing instructions and processor configured to execute the instructions to generate a Radio Access Network (RAN) slice in a Fifth Generation (5G) New Radio (NR) base station designated for a particular type of service; determine requirements associated with the generated RAN slice; and reserve resources of the 5G NR base station for the generated RAN slice, wherein reserving the resources includes specifying one or more antenna beams generated by the 5G NR base station. The processor may be further configured to obtain criteria for categorizing user equipment (UE) device sessions as belonging to the generated RAN slice; identify UE device sessions as belonging to the RAN slice based on the obtained criteria; and apply the determined requirements to the identified UE device session using the reserved resources.

US2014133322 discloses a method and apparatus are provided for improving capacity in wireless communications systems for use in areas having a high user traffic density. For reception, signals received from an antenna array are processed by performing a transformation comprising aperture synthesis to map signal content received from the antenna array to at least one element of a plurality of elements in an image plane storage to produce a time series of values for the at least one element, and then by assigning the at least one element to at least one radio access transceiver of a plurality of radio access transceivers for receiving the time series of values from the at least one element. For transmission, at least one radio access transceiver of a plurality of radio access transceivers is assigned to at least one element of a plurality of elements in an image plane storage, the assignment providing for the at least one element to receive a time series of values from the at least one radio access transceiver, and then a transformation is performed comprising antenna synthesis to map the time series of values from the at least one element to the signals for transmission by the antenna array.

### Statements of invention

The invention is defined by the appended claims.

According to a first aspect of the present invention, corresponding to claim 1, there is provided: a method performed by operating a radio access point, providing a radio access network for a telecommunications network, comprising a plurality of antenna elements, the method comprising the steps of: determining a performance requirement for a network slice to which a User Equipment, UE, of the telecommunications network is allocated; selecting, in dependence upon said determined performance requirement, a spatial arrangement of a subset of the plurality of antenna elements; reserving the selected subset for use only by the network slice; communicating a network communication between the radio access point and the UE using only the subset of antenna elements; receiving, at the radio access point, a wireless signal from the UE; identifying the network slice to which the UE is allocated, thereby to determine the subset of antenna elements; and performing aperture synthesis of the wireless signal using each of the antenna elements of the subset by measuring amplitude and phase of the wireless signal by means of each antenna element of the subset.

Preferably, the subset of antenna elements comprises at least two antenna elements, and may not comprise all antenna elements of the radio access point. As used herein, the term "spatial arrangement", as applied to the subset of antenna elements, preferably connotes a relative and/or absolute spatial distribution of the antenna elements, characterised, at least, by a separation between antenna elements. The "spatial arrangement" may include a geometric pattern.

Preferably, performing aperture synthesis comprises performing (optionally, non-linear) deconvolution and/or a Fourier transform upon the wireless signal as received by each of the antenna elements of the subset. Preferably, performing aperture synthesis further comprises joint interference cancellation processing. Preferably, said aperture synthesis is performed without processing any wireless signal that is received by an antenna element that is not a member of the subset of antenna elements. Preferably, the aperture synthesis is performed by a Radio Resource Unit of the radio access point.

Preferably, communicating the network communication further comprises transmitting, from the radio access point to the UE, a wireless signal using only each of the antenna elements of the subset.

Preferably, a separating distance between at least two of the antenna elements of the subset is selected in dependence upon the performance requirement. Preferably, the separating distance between each antenna element is selected dependence upon the performance requirement. Preferably, the separating distance and/or an area bound by the subset is increased with an increasing performance requirement.

Preferably, an area enclosed by the subset of antenna elements of the subset is selected in dependence upon the performance requirement. Preferably, said area is increased with increasing performance requirement, and may be increased by using a minimal number of antenna elements.

Preferably, the separating distance and/or an area bound by the subset is decreased with a decreasing performance requirement.

Preferably, selecting the spatial arrangement further comprises selecting the subset to have at least one axis of symmetry. Optionally, the arrangement is symmetric about at least one axis.

Preferably, selecting the spatial arrangement further comprises selecting a ratio of the subset of antenna elements that are arranged in linear alignment. Preferably, a ratio of horizontally aligned antenna elements is increased, and may be maximised, when the UE is associated with a vertically mobile entity (e.g. a terrestrial or marine mobile entity), thereby to help improve spatial resolution as the entity moves horizontally. Preferably, a ratio of vertically aligned antenna elements is increased, and may be maximised, when the UE is associated with a vertically mobile entity (e.g. an airborne, spacefaring and/or mobile entity), thereby to help improve spatial resolution as the entity moves vertically.

Preferably, the method further comprises the step of selecting a number of antenna elements for populating the subset, wherein said number is selected in dependence upon the performance requirement.

Preferably, the method further comprises the step of selecting a number of antenna elements for populating the subset, wherein said number is selected independently of the performance requirement. Optionally, said number is fixed for every network slice. Optionally, said number is selected in dependence upon the number of network slices provided at the radio access point.

According to another aspect of the invention, corresponding to claim 9, there is provided a computer-readable carrier medium comprising a computer program, which, when the computer program is executed by a computer included as a part of a radio access point, causes the computer to carry out the methods as described above.

According to yet another aspect of the invention, corresponding to claim 10, there is provided a radio access point comprising: receiver configured to receive a wireless signal from User Equipment, UE; a processor configured to: determine a performance requirement for a network slice to which the UE is allocated; select, in dependence upon said determined performance requirement, a spatial arrangement of a subset of the plurality of antenna elements; identify the network slice to which the UE is allocated, thereby to determine the subset of antenna elements; and perform aperture synthesis of the wireless signal using each of the antenna elements of the subset by measuring amplitude and phase of the wireless signal by means of each antenna element of the subset; a controller configured to reserve the selected subset for use only by the network slice; and a transmitter configured to communicate a network communication between the radio access point and the UE using only the subset of antenna elements.

Optionally, the method further comprises the step of identifying the UE as being allocated to the network slice, which may be performed by processing the received wireless signal so as to retrieve a unique identifier of the UE, wherein said unique identifier may be a unique subscriber identity.

Preferably, identifying the UE as being allocated to the network slice is performed by retrieving a mapping (optionally stored at the radio access point) associating the identified UE to the network slice.

Preferably, the method further comprises the step of identifying available antenna elements from information provided by the Radio Resource Unit, and wherein of reserving the subset of antenna elements is performed in dependence upon identifying the available antenna elements.

Preferably, the method further comprises the step of storing information associating a unique identity of each antenna element in the subset of antenna elements and a unique identity of the network slice.

Optionally, the telecommunications network is in the form of: a wide-area cellular telecommunications network; wireless local area telecommunications network; satellite communications network; and/or HetNet.

Preferably, the plurality of antenna elements form part of a MIMO antenna array. Preferably, the plurality of antenna elements are configured as co-operating antenna elements. Preferably, the radio access point is in the form of a gNodeB or an eNodeB.

Preferably, the network slice is also provided at a core of the telecommunication network. Preferably, the network slice is an end-to-end network slice.

Preferably, the method further comprises the step of receiving a command to establish the network slice at the radio access point, and performing the step of reserving the subset of antenna elements in response to the command.

Preferably, the steps of determining, selecting, reserving and/or communicating are only performed by a portion of the telecommunications network that is entirely upstream of the UE. As used herein, the term "upstream" preferably connotes away from the UE and towards the network core. As such, the steps may be performed by only the radio access point and the network core, entirely without interaction with the UE, such that the method is therefore invisible to the UE.

Preferably, the communicating is performed by a Radio Resource Unit of the radio access point.

In an alternative, the UE comprises a plurality of antenna elements, and the roles of the UE and radio access point may be reversed such that steps performed by the radio access point are instead performed by the UE, and vice versa. That is, the method may be performed by any transmitting and receiving entity, where the transmitting entity comprises a plurality of antenna elements.

The invention includes any novel aspects described and/or illustrated herein. The invention also extends to methods and/or apparatus substantially as herein described and/or as illustrated with reference to the accompanying drawings. The invention is also provided as a computer program and/or a computer program product for carrying out any of the methods described herein and/or for embodying any of the apparatus features described herein, and a computer-readable medium storing thereon a program for carrying out any of the methods and/or for embodying any of the apparatus features described herein. Features described as being implemented in hardware may alternatively be implemented in software, and vice versa.

Any apparatus feature may also be provided as a corresponding step of a method, and vice versa. As used herein, means plus function features may alternatively be expressed in terms of their corresponding structure, for example as a suitably-programmed processor.

Any feature in one aspect of the invention may be applied, in any appropriate combination, to other aspects of the invention. Any, some and/or all features in one aspect can be applied to any, some and/or all features in any other aspect, in any appropriate combination. Particular combinations of the various features described and defined in any aspects of the invention can be implemented and/or supplied and/or used independently.

As used throughout, the word 'or' can be interpreted in the exclusive and/or inclusive sense, unless otherwise specified.

The invention extends to a method for controlling a radio access point, and to a radio access point described herein and/or substantially as illustrated with reference to the accompanying drawings.

The present invention is now described, purely by way of example, with reference to the accompanying diagrammatic drawings, in which:
Figure 1 is a schematic diagram of an exemplary telecommunications network;
Figure 2 is a process for operating the telecommunications network so as to establish a network slice;
Figures 3a to 3d show various spatial arrangements of antenna elements for use by an established network slice;
Figure 4 shows a process for uplink communication using the established network slice; and
Figure 5 shows a process for downlink communication using the established network slice.

### Specific Description

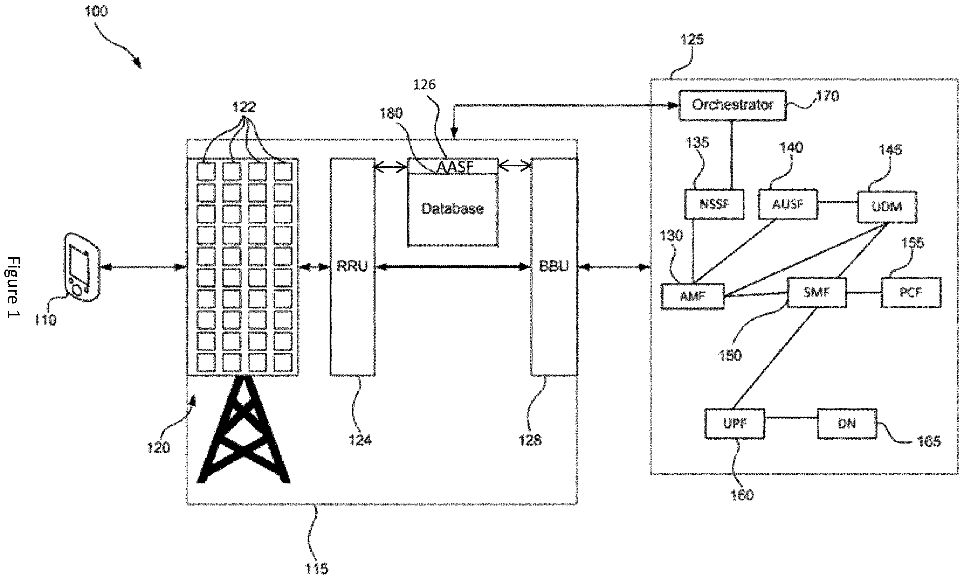

Figure 1 is a schematic diagram of an exemplary telecommunications network 100 in the form of a wide-area cellular telecommunications network, which comprises User Equipment (UE) 110 that is configured to utilise the telecommunications network 100 by accessing a Radio Access Network (RAN), as provided by a radio access point 115 (*e.g.* a macro-, micro-, pico- or femto-cell site). In turn, the radio access point is connected to a core 125 portion of the network 100.

In this example, the network 100 operates in accordance with, for example, 5G technology. Accordingly, the core network 125 comprises the following functional components (their functionality being readily defined in the art):
- Access and mobility Management Function (AMF) 130;
- Network Slice Selection Function (NSSF) 135;
- AUthentication Server Function (AUSF) 140;
- Unified Data Management (UDM) 145;
- Session Management Function (SMF) 150;
- Policy Control Function (PCF) 155;
- User Plane Function (UPF) 160;
- Data Network (DN) 165; and
- Network Orchestrator 170.

By means, at least, of the aforementioned functional components of the core network 125, the network 100 provides and manages a plurality of network slices, wherein each such network slice provides a different service. In particular, the NSSF 135 is configured to identify and to select a suitable network slice for the UE 110 (*e.g*. based on a service subscription of the UE), and network communications associated with the UE are then processed using the identified network slice and the resources allocated to said network slice.

The radio access point 115 comprises alan: multi-antenna array 120; Remote Radio Unit (RRU) 124; Antenna Arrangement Selection Function (AASF) 126; and BaseBand Unit (BBU) 128. The AASF 126 is in communication with the RRU and the BBU, which are also in communication with one another. The Network Orchestrator 170 is in communication with the radio access point 115, and specifically with, at least, the AASF 126.

The multi-antenna array 120 comprises a plurality of antenna elements 122, arranged as an array, with each of the antenna elements comprising a radio-frequency chain (e.g. transceiver, encoder, decoder, amplifier, filter, etc.) for receiving and processing network communications (to and from wireless signals). In the example shown in Figure 1, the multi-antenna array 120 is composed of a 4x10 array of antenna elements 122.

The multi-antenna array 120 is operated, as is known in the art, so as to make use of spatial differences in the receipt of multi-path wireless signals so as to help improve wireless signal processing. In particular, the multi-antenna array utilises a Multiple-Input, Multiple-Output (MIMO) method, and in particular a Multi-User MIMO method. Accordingly, the RRU 124 is configured selectively, and discriminately, to use individual antenna elements 122 for transmission and to demodulate signal streams received by different antenna elements 122 into separate channels. For example, such demodulation is performed using a linear decorrelator and/or joint interference cancellation processing, as is known in relation to MIMO. In one example, the multi-antenna array 120 is in the form of a Minimum Mean-Square Error (MMSE) receiver.

In order to help provide differentiated network slices at the radio access point 115, the telecommunications network 100 is configured to reserve different spatial arrangements of antenna elements 122 for exclusive use by a given network slice and by segregating traffic from, or to, the antenna elements 122 based on the allocation of a UE to a specific network slice.

Because of the differences in propagation paths, antenna elements at different points in the multi-antenna array 120 may transmit or detect different signals (e.g. as to timing, phase and amplitude). These differences may be combined by a receiver to improve reception of wireless signals, thereby helping to provide differentiated services for different network slices. In particular, a process of aperture synthesis can be exploited to this end.

Aperture synthesis (or "synthesis imaging") is an interferometric processing technique that combines signals detected by various spatially-separated detectors. In doing so, angular resolution of a combined signal from the detectors is greater than that of any individual detector, and an angular resolution equivalent to an aperture that is the size of the envelope around the multiple detectors may be realised. For example, using aperture synthesis, four antenna elements (of relatively negligible dimensions) arranged around the perimeter of a 2 meter square, can produce an angular resolution equivalent to a single aperture that is a 2 meter square. The efficacy of aperture synthesis is dependent upon the separation of the detectors; that is, with increasing separation (or baseline), the combined resolving power of the detectors increases.

Accordingly, all else being equal, a spatial arrangement of antenna elements having maximal separation (e.g. at the extremities of the multi-antenna array 120) will allow for greater angular resolution than a spatial arrangement of clustered antenna elements. With greater angular resolution, the performance of the radio access network may be improved, and this improvement may be reserved for specific network slices.

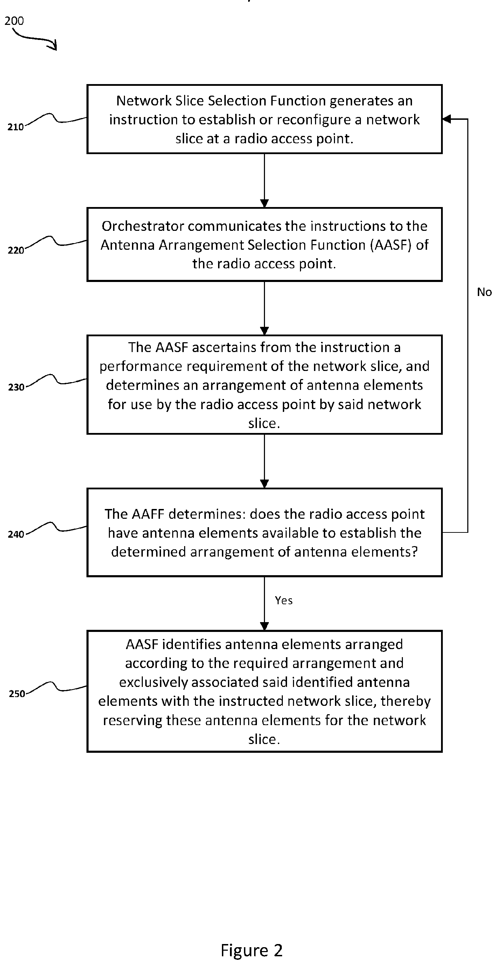

Figure 2 is a process 200 of establishing network slices at the radio access point 115 that may exploit the different characteristics of various spatial arrangements of antenna elements.

In a first step 210, the NSSF 135 generates an instruction to establish a RAN network slice (including reconfiguring an existing RAN network slice). The instruction includes: identity information, identifying the radio access point 115 at which to establish the RAN network slice; a unique identifier of the network slice that is to be established (or reconfigured) at the radio access point 115; performance requirement information, specifying a quality of service required of a network slice; and population information, which identifies the UEs (such as UE 110) that are allocated to the network slice. The instruction is recorded in a database 180 associated with the AASF 126.

The instruction is subsequently communicated 220 to the Network Orchestrator 170, which in turn communicates the instruction to the radio access point 115 specified in the identity information; said instruction is then received by the AASF 126.

The AASF 126 also receives resource availability information from the RRU 124 regarding available radio resources of the multi-antenna array 120. The resource availability information includes, at least, information as to which antenna elements 122 are available (i.e. are not currently reserved for exclusive use by any network slice).

At a next step 230, recognising that different spatial arrangements of antenna elements yield different radio performance characteristics, the AASF determines an arrangement of antenna elements that is most suited to the performance requirement information, which specifies a required standard of performance of the radio access network, such as a required level of a: signal-to-noise ratio; packet error rate; and/or signal angular resolution.

To determine the arrangement of antenna elements, the AASF utilises rules for matching an arrangement of antenna elements to the performance requirement information. In particular, the rules provide that a total outer envelope for antenna elements is maximised for a maximum required performance, and is minimised for a minimum required performance.

In one example, the performance requirement information, and therefore the arrangement of antenna elements, is selected depending, at least, on the type of network slice. For example, a higher-performance network slice (*e.g*. an Ultra-Reliable, Low Latency Connection, URLLC, network slice) is designated a higher performance requirement than a lower-performance network slice (*e.g*. an eMBB network slice), and therefore an arrangement of antenna elements having a larger total extent.

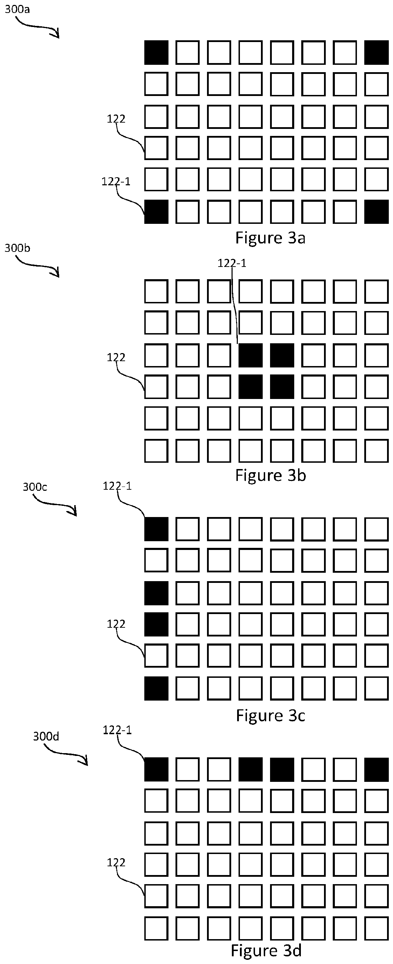

Turning to Figures 3, there are shown various spatial arrangements of (four) antenna elements on a multi-antenna array 120 composed of an 8x6 array of antenna elements 122, in which each arrangement may provide a different level of performance, and therefore provide a differentiated service for use by network slices.

In Figures 3, antenna elements shown shaded in black 122-1 form the arrangement of antenna elements that are to be used by a given network slice, whereas antenna elements not forming a part thereof are unshaded.

In Figure 3a, the arrangement 300a consists of antenna elements at the four extremities of the multi-antenna array 120, thereby maximising the total size of the envelope of the arrangement (*i.e.* to that of the full extent of the multi-antenna array 120), and therefore allowing, by means of aperture synthesis, an effective aperture of 8x6.

In contrast, in Figure 3b, the arrangement 300b consists of a cluster of four adjacent antenna elements, thereby minimising the envelope of the arrangement (in two dimensions, and for an arrangement using four antenna elements), which provides, for the purposes of aperture synthesis, an effective aperture of 2x2.

In Figure 3c, the arrangement 300c consists of solely vertically aligned antenna elements, thereby providing greater vertical angular resolution than horizontal, and an effective relative aperture of 1x6. Such an arrangement may be particularly advantageous where there is a greater performance requirement in only the vertical plane, such as where the UE is associated with an entity capable of moving mostly vertically relative to the radio access point, such as an aircraft.

In Figure 3d, the arrangement 300d consists of solely horizontally aligned antenna elements, thereby providing greater horizontal angular resolution than vertical, and an effective relative aperture of 8x1. Such an arrangement may be particularly advantageous where there is a greater performance requirement in only the horizontal plane, such as where the UE is associated with an entity capable of moving mostly horizontally relative to the radio access point, such as ground-based vehicle.

It will be appreciated that various other spatial arrangements are possible (and with more or fewer antenna elements) for pairing with a required level of performance.

Accordingly, referring to the examples of Figure 3, at step 230 of process 200, the AASF is configured to select the arrangement: 300a where maximum performance is required; 300b where minimum performance is required (where four antenna elements are to be used); 300c where maximum performance is required in only a vertical plane, but minimal performance required in a horizontal plane; and 300d where maximum performance is required in only a horizontal plane, but minimal performance required in a vertical plane.

Returning to Figure 2, at a next step 240, using the resource availability information, the AASF determines whether the multi-antenna array has antenna elements available that are distributed according to the arrangement determined at preceding step 230. If the multi-antenna array 120 has such an arrangement of antenna elements available, then process 200 proceeds to step 250, at which point the AASF 126 selects a subset of (available) antenna elements being distributed according to the identified arrangement, and then associates the selected subset of antenna elements with the network slice, thereby generating mapping information associating specific antenna elements to the specific network slice; said mapping information is recorded in the database 180. Based on the mapping information, the AASF 126 instructs the RRU 124 to effect logical segregation of the multi-antenna array 120 so as to reserve the selected subset of antenna elements for exclusive use for network communications that are associated with its mapped network slice. In this way, the subset of antenna elements are logically segregated from the remainder of the multi-antenna array 120. In this way, the efficacy of aperture synthesis is tailored to the performance requirement of a network slice.

If, however, the radio access point 115 does not have antenna elements distributed according to the identified arrangement, as determined at step 230, then process 200 reiterates to step 210, and the NSSF 135 attempts instead to establish the network slice at the RAN by instructing reservation of antenna elements 122 having scaled-down performance requirements and/or having freed-up antenna elements from other network slices.

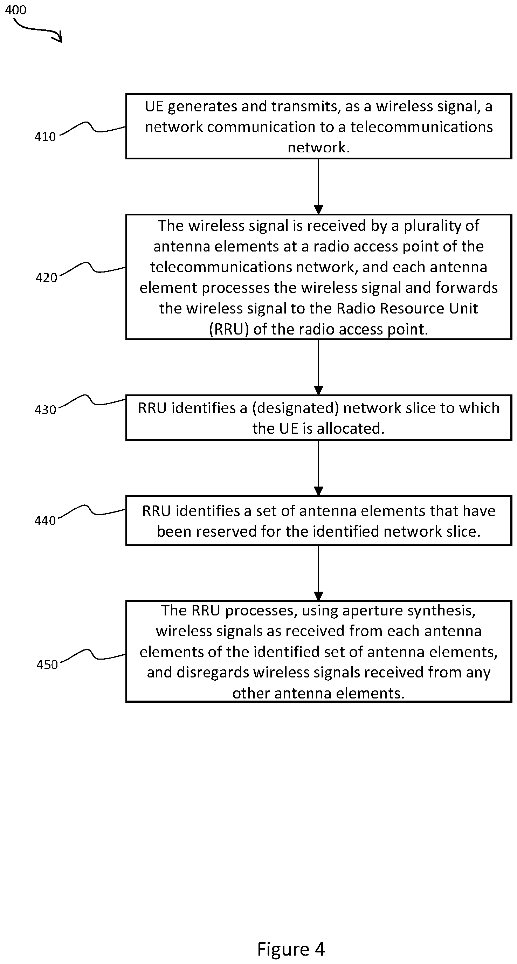

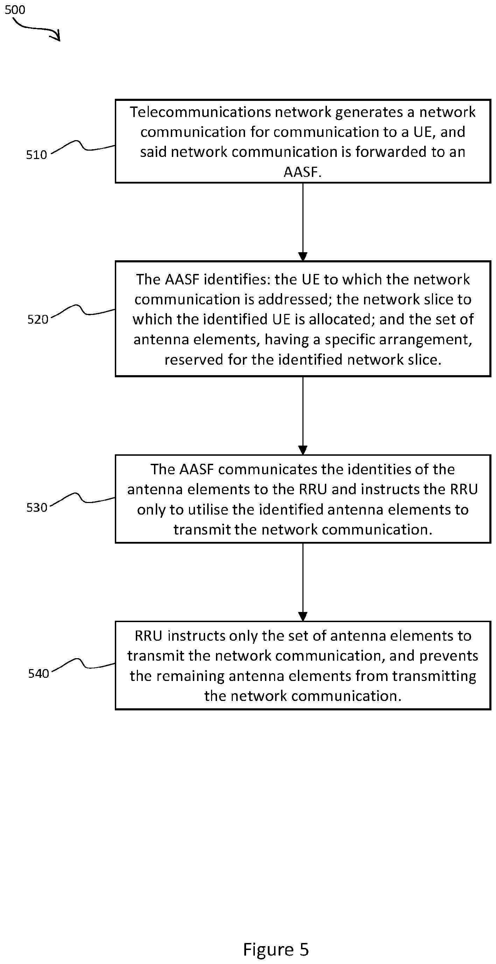

Figures 4 and 5 each show a process of uplink and downlink communication, respectively, between the UE 110 and the radio access point 115, in which the radio access point is configured to provide RAN network slicing using an arrangement of antenna elements as selected using process 200 (which therefore precedes both processes 400 and 500).

With reference to Figure 4, the uplink process 400 comprises a first step 410 in which the UE 110 generates a network communication addressed to the radio access point 115 and subsequently transmits the network communications as a wireless signal.

At a next step 420, the wireless signal is indiscriminately received at the plurality of the antenna elements 122, including antenna elements that are, and that are not, allocated to the network slice of the UE. Subsequently, each antenna element 122 that receives the wireless signal processes the received wireless signal and individually forwards the wireless signal on to the RRU 124.

At a next step 430, the RRU 124 performs initial processing of each wireless signal received from the antenna elements; said initial processing is performed so as to identify the designated network slice associated with each wireless signal, and therefore with the UE. In one example, identification of the designated network slice is performed by analysing the wireless signals so as to identify the UE 110, for example based on a unique subscriber identifier value, and mapping the identity of the UE 110 to its designated network slice based on the population information (as described with reference to process 200).

Having identified the designated network slice, at a next step 440, the RRU then retrieves the mapping information (as described with reference to process 200) from the AASF 126, so as to identify the subset of antenna elements that are reserved for the network slice 110 to which the UE is designated.

At a final step 450, the RRU performs aperture synthesis processing of the wireless signals as received only by the antenna elements in the identified subset, and disregards wireless signals from the remaining antenna elements.

To perform aperture synthesis, amplitude and phase of the wireless signals are measured, and an interferometric processing technique is performed upon these measurements so as to output a combined single signal from the subset of antenna elements, which is converted into a network communication for onward transmission to the BBU 128.

The BBU is then available to communicate the network communication from the RRU on to the network core 125 for ongoing processing via the designated network slice.

With reference to Figure 5, the downlink process 500 comprises a first step 510 in which the telecommunications network generates a network communication addressed to the UE 110. The network communication traverses the network core 125 and is communicated to the radio access point 115 via the BBU 128. The BBU 128 then forwards the network communication to the AASF 126.

At a next step 520, upon receipt of the network communication, the AASF 126 processes the network communications so as to identify the UE 110 to which the network communication is addressed. The AASF 126 also retrieves, from the population information and the mapping information (as described with reference to process 200), associations between the identified UE 110 and the: network slice to which the UE is allocated; and the subset of antenna elements, having a specific arrangement, that are reserved for the network slice.

In a subsequent step 530, the AASF 126 communicates to the RRU 124 the identities of each antenna element in the identified subset of antenna elements allocated to the identified network slice for the UE, and the AASF instructs the RRU 124 to transmit the network communication using only the antenna elements belonging to said subset of antenna elements.

In a final step 540, the RRU causes only the identified subset of antenna elements to transmit the network communication to the UE 110, and does not instruct the remaining antenna elements to do so.

In this way, when transmitting to a UE using more distally arranged antenna elements, wireless signal detection may be improved by providing more disparate propagation paths, the results of which (*e.g.* a greater spread of *"time-to-arrivaf"*) can be processed by the UE to improve aspects of signal detection, as per methods known in the art.

### Alternatives and Modifications

In the aforementioned, the telecommunications network 100 is generally shown and described as a cellular wide area network. However, in one alternative the telecommunications network is any kind of telecommunications network, including other forms of wide area networks (such as a satellite network), a wireless local area network, or combination of network types.

In an alternative example, the instructions, as received by the radio access point 115, also include a priority level. The AASF 126 then instructs the allocation of antenna elements to network slices in a prioritised manner based on the received priority level; this includes transferring an antenna element already reserved to a lower-priority network slice to a new high-priority network slice.

Although shown as a single entity within the core network for simplicity, it will be appreciated that the Network Orchestrator 170 may include various separate entities, such as individual, and distributed, orchestrators for different domains of the telecommunications network such as for the core network, the transport network, the RAN, and for individual radio access points. These individual components of the core network are available to communicate so as to provide end-to-end (*i.e.* between a radio access point and the core network) orchestration, including to facilitate end-to-end orchestration.

It will be appreciated that the multi-antenna array 120 is available to be segregated into a plurality of subsets of antenna elements, wherein each subset is reserved for a different network slice (or subset of network slices), and wherein the arrangement of antenna elements in each subset may be different.

A subset of antenna elements that is reserved for a network slice may comprise at least two antenna element. At least one antenna element is available to be unreserved, such that no network slice has exclusive use of that antenna element. In this way, network communications for UEs that are not allocated to a network slice may be transmitted via the at least one unreserved antenna element.

In yet another alternative example, a given antenna element may be reserved for at least two network slices, to the exclusion of other network slices. In this way, an antenna element may be shared between a subset of network slices.

Each feature disclosed herein, and (where appropriate) as part of the claims and drawings may be provided independently or in any appropriate combination.

Any reference numerals appearing in the claims are for illustration only and shall not limit the scope of the claims.

## Claims

1. A method (200) performed by operating a radio access point (115), providing a radio access network for a telecommunications network (100), comprising a plurality of antenna elements (122), the method comprising the steps of:
determining a performance requirement for a network slice to which a User Equipment (110), UE, of the telecommunications network is allocated (230);
selecting, in dependence upon said determined performance requirement, a spatial arrangement of a subset (122-1) of the plurality of antenna elements (230);
reserving the selected subset for use only by the network slice (250);
communicating a network communication between the radio access point and the UE using only the subset of antenna elements (540);
receiving, at the radio access point, a wireless signal from the UE (420);
identifying the network slice to which the UE is allocated (430), thereby to determine the subset of antenna elements (440); and
performing aperture synthesis of the wireless signal using each of the antenna elements of the subset (450) by measuring amplitude and phase of the wireless signal by means of each antenna element (122) of the subset (122-1).

2. The method according to any preceding claim, wherein communicating the network communication further comprises transmitting, from the radio access point (115) to the UE (110), a wireless signal using only each of the antenna elements of the subset (122-1).

3. The method according to any preceding claim, wherein a separating distance between at least two of the antenna elements of the subset (122-1) is selected in dependence upon the performance requirement.

4. The method according to any preceding claim, wherein an area enclosed by the subset of antenna elements of the subset (122-1) is selected in dependence upon the performance requirement.

5. The method according to any preceding claim, wherein selecting the spatial arrangement further comprises selecting the subset (122-1) to have at least one axis of symmetry.

6. The method according to any preceding claim, wherein selecting the spatial arrangement further comprises selecting a ratio of the subset (122-1) of antenna elements that are arranged in linear alignment.

7. The method according to any preceding claim, further comprising the step of selecting a number of antenna elements for populating the subset (122-1), wherein said number is selected in dependence upon the performance requirement.

8. The method according to any of Claims 1 to 7, further comprising the step of selecting a number of antenna elements for populating the subset (122-1), wherein said number is selected independently of the performance requirement.

9. A computer-readable carrier medium comprising a computer program, which, when the computer program is executed by a computer included as a part of a radio access point, causes the computer to carry out the steps of any one of the preceding claims.

10. A radio access point (115) comprising:
receiver configured to receive a wireless signal from User Equipment, UE (110);
a processor configured to:
determine a performance requirement for a network slice to which the User Equipment, UE, is allocated (230);
select, in dependence upon said determined performance requirement, a spatial arrangement of a subset (122-1) of the plurality of antenna elements (230);
identify the network slice to which the UE is allocated (420), thereby to determine the subset of antenna elements (430); and
perform aperture synthesis of the wireless signal using each of the antenna elements of the subset (450) by measuring amplitude and phase of the wireless signal by means of each antenna element (122) of the subset (122-1);
a controller configured to reserve the selected subset for use only by the network slice (540); and
a transmitter configured to communicate a network communication between the radio access point and the UE using only the subset of antenna elements (540).

## Patentansprüche

1. Verfahren (200), das beim Betrieb eines Funkzugangspunktes (115) durchgeführt wird, der ein Funkzugangsnetz für ein Telekommunikationsnetz (100) bereitstellt und eine Vielzahl von Antennenelementen (122) umfasst, wobei das Verfahren die folgenden Schritte umfasst:
Bestimmen einer Leistungsanforderung für ein Netz-Slice, dem ein Benutzergerät (110), UE, des Telekommunikationsnetzes zugewiesen ist (230);
Auswählen, in Abhängigkeit von der bestimmten Leistungsanforderung, einer räumlichen Anordnung einer Teilmenge (122-1) der Vielzahl von Antennenelementen (230) ;
Reservieren der ausgewählten Teilmenge zur ausschließlichen Verwendung durch das Netz-Slice (250);
Übermitteln einer Netzkommunikation zwischen dem Funkzugangspunkt und dem UE unter ausschließlicher Verwendung der Teilmenge von Antennenelementen (540);
Empfangen, am Funkzugangspunkt, eines Drahtlossignals vom UE (420);
Identifizieren des Netz-Slice, dem das UE zugewiesen ist (430), um dadurch die Teilmenge von Antennenelementen zu bestimmen (440); und
Durchführen von Apertursynthese des Drahtlossignals unter Verwendung jedes der Antennenelemente der Teilmenge (450) durch Messen von Amplitude und Phase des Drahtlossignals mittels jedes Antennenelements (122) der Teilmenge (122-1).

2. Verfahren nach einem der vorhergehenden Ansprüche, wobei das Übermitteln der Netzkommunikation ferner das Übertragen eines Drahtlossignals vom Funkzugangspunkt (115) an das UE (110) umfasst, wobei ausschließlich jedes der Antennenelemente der Teilmenge (122-1) verwendet wird.

3. Verfahren nach einem der vorhergehenden Ansprüche, wobei ein Trennungsabstand zwischen mindestens zwei der Antennenelemente der Teilmenge (122-1) in Abhängigkeit von der Leistungsanforderung gewählt wird.

4. Verfahren nach einem der vorhergehenden Ansprüche, wobei eine Fläche, die von der Teilmenge von Antennenelementen der Teilmenge (122-1) umschlossen wird, in Abhängigkeit von der Leistungsanforderung ausgewählt wird.

5. Verfahren nach einem der vorhergehenden Ansprüche, wobei das Auswählen der räumlichen Anordnung ferner das Auswählen der Teilmenge (122-1) auf eine solche Weise umfasst, dass sie mindestens eine Symmetrieachse aufweist.

6. Verfahren nach einem der vorhergehenden Ansprüche, wobei das Auswählen der räumlichen Anordnung ferner das Auswählen eines Verhältnisses der Teilmenge (122-1) von Antennenelementen umfasst, die in linearer Ausrichtung angeordnet sind.

7. Verfahren nach einem der vorhergehenden Ansprüche, ferner umfassend den Schritt des Auswählens einer Anzahl von Antennenelementen zum Auffüllen der Teilmenge (122-1), wobei die Anzahl in Abhängigkeit von der Leistungsanforderung ausgewählt wird.

8. Verfahren nach einem der Ansprüche 1 bis 7, ferner umfassend den Schritt des Auswählens einer Anzahl von Antennenelementen zum Auffüllen der Teilmenge (122-1), wobei die Anzahl unabhängig von der Leistungsanforderung ausgewählt wird.

9. Computerlesbares Trägermedium, umfassend ein Computerprogramm, das bei Ausführung des Computerprogramms durch einen Computer, der als Teil in einem Funkzugangspunkt beinhaltet ist, den Computer veranlasst, die Schritte nach einem der vorhergehenden Ansprüche durchzuführen.

10. Funkzugangspunkt (115), umfassend:
einen Empfänger, der dafür ausgelegt ist, ein Drahtlossignal von einem Benutzergerät (UE) (110) zu empfangen;
einen Prozessor, der für folgende Vorgänge ausgelegt ist:
Bestimmen einer Leistungsanforderung für ein Netz-Slice, dem ein Benutzergerät, UE, zugewiesen ist (230);
Auswählen, in Abhängigkeit von der bestimmten Leistungsanforderung, einer räumlichen Anordnung einer Teilmenge (122-1) der Vielzahl von Antennenelementen (230) ;
Identifizieren des Netz-Slice, dem das UE zugewiesen ist (420), um dadurch die Teilmenge von Antennenelementen zu bestimmen (430); und
Durchführen von Apertursynthese des Drahtlossignals unter Verwendung jedes der Antennenelemente der Teilmenge (450) durch Messen von Amplitude und Phase des Drahtlossignals mittels jedes Antennenelements (122) der Teilmenge (122-1);
eine Steuerung, die dafür ausgelegt ist, die ausgewählte Teilmenge zur ausschließlichen Verwendung durch das Netz-Slice (540) zu reservieren; und
einen Sender, der dafür ausgelegt ist, eine Netzkommunikation zwischen dem Funkzugangspunkt und dem UE unter ausschließlicher Verwendung der Teilmenge von Antennenelementen (540) zu übermitteln;

## Revendications

1. Procédé (200) exécuté par l'exploitation d'un point d'accès radio (115), fournissant un réseau d'accès radio pour un réseau de télécommunication (100), comprenant une pluralité d'éléments d'antenne (122), le procédé comprenant les étapes suivantes :
déterminer une exigence de performance pour une tranche de réseau à laquelle un équipement d'utilisateur (110), UE, du réseau de télécommunication est alloué (230) ;
sélectionner, en fonction de ladite exigence de performance déterminée, une disposition spatiale d'un sous-ensemble (122-1) de la pluralité d'éléments d'antenne (230) ;
réserver le sous-ensemble sélectionné à l'usage exclusif de la tranche de réseau (250) ;
établir une communication de réseau entre le point d'accès radio et l'UE en utilisant uniquement le sous-ensemble d'éléments d'antenne (540) ;
recevoir, au niveau du point d'accès radio, un signal sans fil provenant de l'UE (420) ;
identifier la tranche de réseau à laquelle l'UE est alloué (430), afin de déterminer le sous-ensemble d'éléments d'antenne (440) ; et
effectuer une synthèse d'ouverture du signal sans fil en utilisant chacun des éléments d'antenne du sous-ensemble (450) en mesurant l'amplitude et la phase du signal sans fil au moyen de chaque élément d'antenne (122) du sous-ensemble (122-1).

2. Procédé selon l'une quelconque des revendications précédentes, dans lequel la communication réseau comprend en outre de transmettre, depuis le point d'accès radio (115) vers l'UE (110), un signal sans fil en utilisant uniquement chacun des éléments d'antenne du sous-ensemble (122-1).

3. Procédé selon l'une quelconque des revendications précédentes, dans lequel une distance de séparation entre au moins deux des éléments d'antenne du sous-ensemble (122-1) est sélectionnée en fonction de l'exigence de performance.

4. Procédé selon l'une quelconque des revendications précédentes, dans lequel une zone entourée par le sous-ensemble d'éléments d'antenne du sous-ensemble (122-1) est sélectionnée en fonction de l'exigence de performance.

5. Procédé selon l'une quelconque des revendications précédentes, dans lequel la sélection de la disposition spatiale comprend en outre de sélectionner le sous-ensemble (122-1) pour avoir au moins un axe de symétrie.

6. Procédé selon l'une quelconque des revendications précédentes, dans lequel la sélection de la disposition spatiale comprend en outre de sélectionner un rapport du sous-ensemble (122-1) d'éléments d'antenne qui sont disposés suivant un alignement linéaire.

7. Procédé selon l'une quelconque des revendications précédentes, comprenant en outre l'étape de sélection d'un certain nombre d'éléments d'antenne pour peupler le sous-ensemble (122-1), ledit nombre étant sélectionné en fonction de l'exigence de performance.

8. Procédé selon l'une quelconque des revendications 1 à 7, comprenant en outre l'étape de sélection d'un certain nombre d'éléments d'antenne pour peupler le sous-ensemble (122-1), ledit nombre étant sélectionné indépendamment de l'exigence de performance.

9. Support lisible par ordinateur comprenant un programme informatique qui, lorsque le programme informatique est exécuté par un ordinateur inclus en tant que partie d'un point d'accès radio, amène l'ordinateur à exécuter les étapes de l'une quelconque des revendications précédentes.

10. Point d'accès radio (115) comprenant :
un récepteur configuré pour recevoir un signal sans fil de l'équipement d'utilisateur (110) ;
un processeur configuré pour :
déterminer une exigence de performance pour une tranche de réseau à laquelle l'équipement d'utilisateur, UE, est alloué (230) ;
sélectionner, en fonction de ladite exigence de performance déterminée, une disposition spatiale d'un sous-ensemble (122-1) de la pluralité d'éléments d'antenne (230) ;
identifier la tranche de réseau à laquelle l'UE est alloué (420), afin de déterminer le sous-ensemble d'éléments d'antenne (430) ; et
effectuer une synthèse d'ouverture du signal sans fil en utilisant chacun des éléments d'antenne du sous-ensemble (450) en mesurant l'amplitude et la phase du signal sans fil au moyen de chaque élément d'antenne (122) du sous-ensemble (122-1) ;
un contrôleur configuré pour réserver le sous-ensemble sélectionné à l'usage exclusif de la tranche de réseau (540) ; et
un émetteur configuré pour transmettre une communication réseau entre le point d'accès radio et l'UE en utilisant uniquement le sous-ensemble d'éléments d'antenne (540).
